(19) Europäisches Patentamt
European Patent Office
Office européen des brevets

(11) EP 4 772 548 A1

(12) # EUROPEAN PATENT APPLICATION
published in accordance with Art. 153(4) EPC

(43) Date of publication:
**08.07.2026 Bulletin 2026/28**

(21) Application number: **24859071.3**

(22) Date of filing: **28.05.2024**

(51) International Patent Classification (IPC):
***C08F 30/08*** *(2006.01)* ***G02C 7/04*** *(2006.01)*

(52) Cooperative Patent Classification (CPC):
**C08F 30/08; G02C 7/04**

(86) International application number:
**PCT/JP2024/019475**

(87) International publication number:
**WO 2025/047022 (06.03.2025 Gazette 2025/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.08.2023 JP 2023140755**

(71) Applicant: **JNC Corporation**
**Chiyoda-ku**
**Tokyo 100-8105 (JP)**

(72) Inventors:
- **KOSEKI, Yohei**
  **Ichihara-shi, Chiba 290-8551 (JP)**
- **KONDO, Manabu**
  **Ichihara-shi, Chiba 290-8551 (JP)**

(74) Representative: **Becker, Eberhard**
**Becker Kurig & Partner**
**Patentanwälte mbB**
**Bavariastraße 7**
**80336 München (DE)**

(54) **COMPOSITION FOR CONTACT LENSES, CONTACT LENS, AND METHOD FOR PRODUCING CONTACT LENS**

(57) The present invention provides: a silicone compound which is compatible with a hydrophilic monomer; and a composition for contact lenses, the composition being capable of forming a transparent polymer. The composition for contact lenses contains a compound represented by formula (1). In formula (1), n represents an integer of 0 to 300, $R_1$, $R_2$, $R_3$, $R_4$, $R_5$, $R_6$, $R_7$, and $R_8$ each independently represent a hydrogen atom or an alkyl group having 1 to 30 carbon atoms, $R_9$ and $R_{10}$ each independently represent a hydrogen atom or a methyl group, and $X_1$, $X_2$, $X_3$, and $X_4$ each independently represent an alkylene group having 1 to 20 carbon atoms.

EP 4 772 548 A1

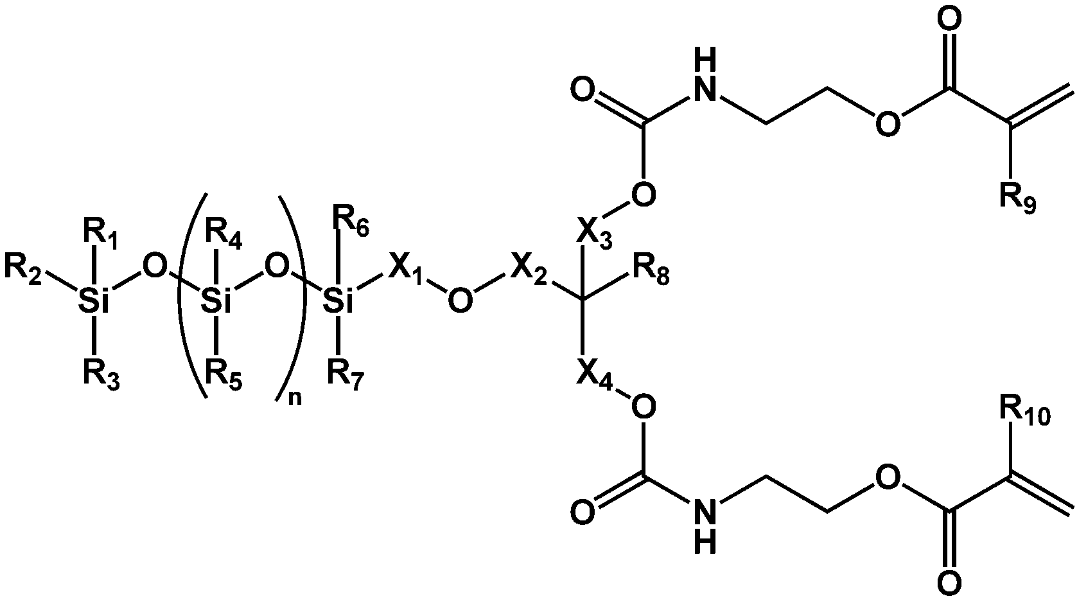

(1)

## Description

### Technical Field

The present invention relates to a composition for contact lenses, a contact lens, and a method for producing a contact lens. More specifically, the present invention relates to a silicone compound serving as a raw material of a composition for contact lenses, a contact lens including a polymer thereof, and a method for producing the same.

### Related Art

As a material used for soft contact lenses, silicone hydrogel is known which is obtained by combining a silicone material with a hydrogel material. Due to its high oxygen permeability, silicone hydrogel enables a reduction of the burden on the eyes when used as a contact lens. Since silicone hydrogel may contain an appropriate amount of moisture and is resistant to drying, a comfortable wearing feeling can be achieved.

Silicone hydrogel may be obtained, for example, by copolymerizing polydimethylsiloxane having a (meth) acryloyl group as a silicone compound with a hydrophilic monomer. However, since polydimethylsiloxane is hydrophobic, the silicone compound has poor compatibility with hydrophilic monomers, and there has been a problem that a transparent copolymer cannot be obtained. Hence, developments of silicone compounds that are compatible with hydrophilic monomers are being conducted (see, for example, Patent Documents 1 to 3).

### Prior Art Documents

### Patent Documents

Patent Document 1: Japanese Patent Laid-Open No. 2015-140393
Patent Document 2: Japanese Patent Laid-Open No. 2016-196644
Patent Document 3: Japanese Patent Laid-Open No. 2016-000779

## SUMMARY OF INVENTION

### Technical Problem

As described above, a silicone compound compatible with a hydrophilic monomer is sought as a raw material of a composition for contact lenses. Accordingly, the present inventors conducted intensive studies with the aim of providing a silicone compound compatible with a hydrophilic monomer and providing a composition for contact lenses capable of forming a transparent polymer.

### Solution to Problem

As a result of conducting the intensive studies to solve the above problems, the present inventors found that a compound represented by formula (1) is compatible with a hydrophilic monomer, a polymer of the compound is transparent, and a water content of the polymer is a favorable value for a contact lens, and thus completed the present invention.

The present invention includes the following configurations.

[1] A composition for contact lenses, containing a compound represented by formula (1).

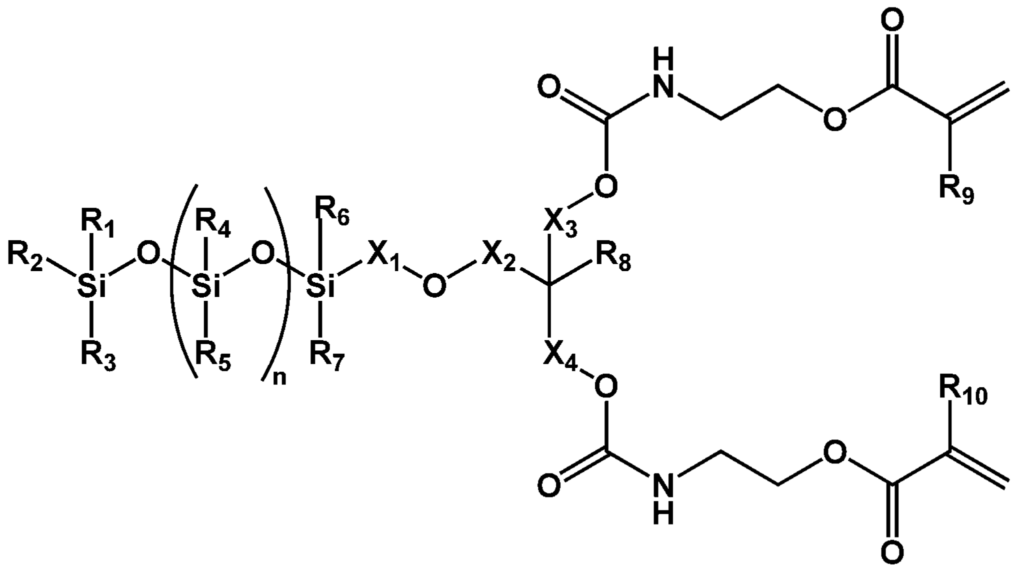

**(1)**

In formula (1), n is an integer of 0 to 300, $R_1$, $R_2$, $R_3$, $R_4$, $R_5$, $R_6$, $R_7$, and Rg are each independently hydrogen or alkyl having 1 to 30 carbon atoms, $R_9$ and $R_{10}$ are each independently hydrogen or methyl, and $X_1$, $X_2$, $X_3$, and $X_4$ are each independently alkylene having 1 to 20 carbon atoms.

[2] The composition for contact lenses as described in item [1], in which the compound represented by formula (1) is a compound represented by formula (2).

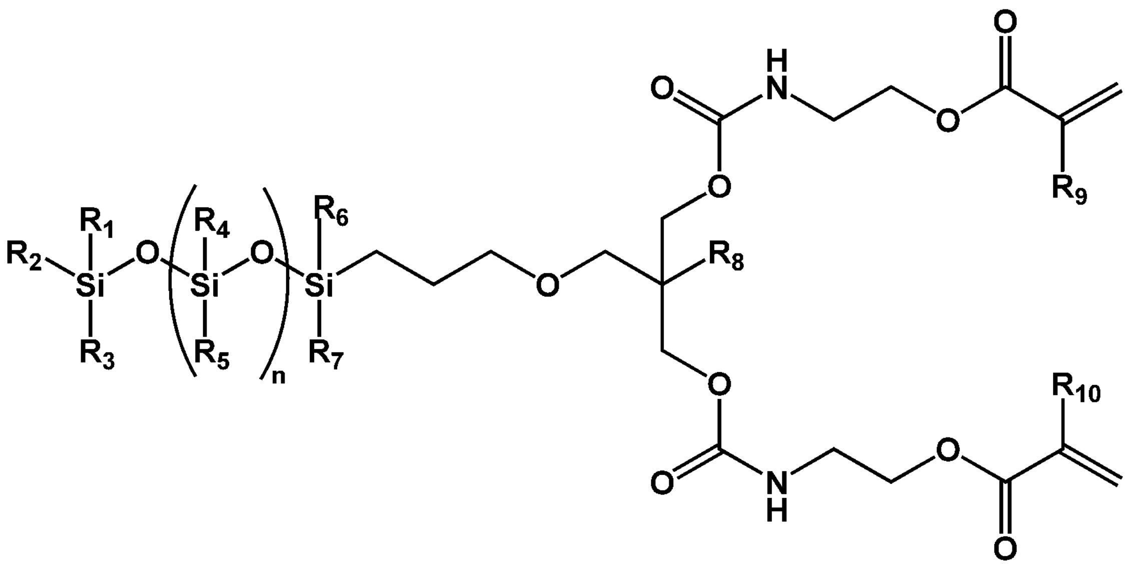

**(2)**

In formula (2), n is an integer of 0 to 300, $R_1$, $R_2$, $R_3$, $R_4$, $R_5$, $R_6$, $R_7$, and $R_8$ are each independently hydrogen or alkyl having 1 to 30 carbon atoms, and $R_9$ and $R_{10}$ are each independently hydrogen or methyl.

[3] The composition for contact lenses as described in item [1] or [2], in which the compound represented by formula (1) or formula (2) is a compound represented by formula (3).

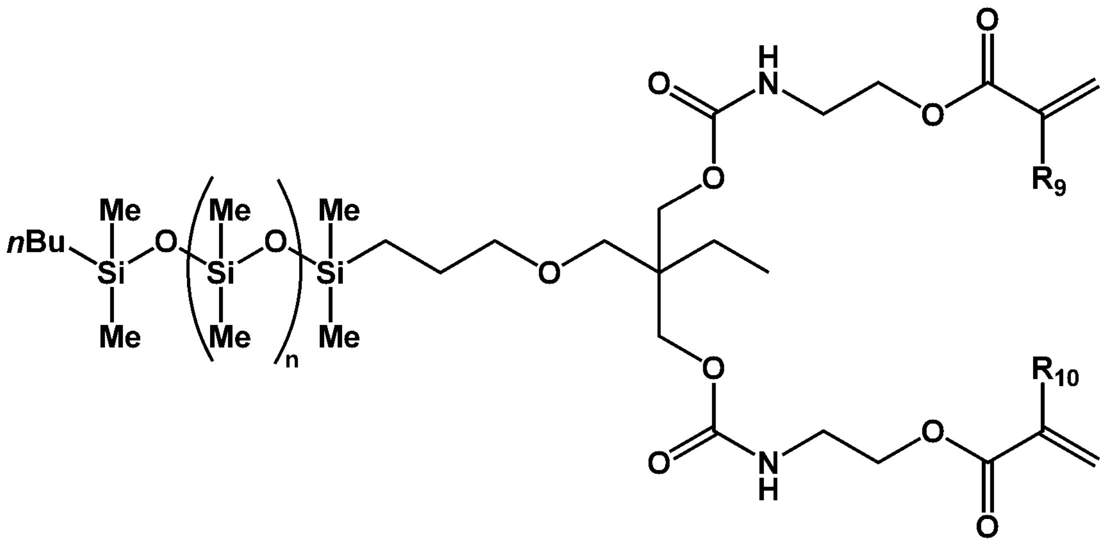

(3)

In formula (3), n is an integer of 0 to 300, and $R_9$ and $R_{10}$ are each independently hydrogen or methyl.

[4] The composition for contact lenses as described in any one of items [1] to [3], further containing at least one hydrophilic monomer.

[5] The composition for contact lenses as described in item [4], in which the hydrophilic monomer is any one or more of N,N-dimethyl(meth)acrylamide, N,N-diethyl(meth)acrylamide, N-vinylpyrrolidone, 2-hydroxyethyl (meth)acrylate, 2-hydroxypropyl (meth)acrylate, and 4-hydroxybutyl (meth)acrylate.

[6] The composition for contact lenses as described in item [5], further containing a polymerization initiator.

[7] The composition for contact lenses as described in item [6], including 1 to 50 parts by weight of the compound represented by formula (1), 20 to 95 parts by weight of the hydrophilic monomer, and 0.01 to 10 parts by weight of the polymerization initiator.

[8] A contact lens, including a polymer of the composition for contact lenses as described in any one of items [1] to [7].

[9] A method for producing a contact lens, including polymerizing the composition for contact lenses as described in any one of items [1] to [7] by heat or ultraviolet irradiation.

Effects of Invention

By using the composition for contact lenses of the present invention, a transparent polymer can be obtained. By using this polymer, a contact lens that is transparent and has an appropriate water content can be realized.

DESCRIPTION OF THE EMBODIMENTS

In the following, the present invention will be described in detail. The description of the constituent elements described below may be given based on representative embodiments or specific examples, but the present invention is not limited to such embodiments.

The "composition for contact lenses of the present invention" may be referred to as "raw material composition of the present invention." A polymer obtained by polymerizing a raw material composition containing a compound represented by formula (1) in the present invention may be referred to as "polymer of the present invention." "(Meth) acrylate" means "any one or both of acrylate and methacrylate." "(Meth)acrylamide" means "any one or both of acrylamide and methacrylamide." "(Meth)acryloyl group" means "any one or both of acryloyl group and methacryloyl group."

<Compound Represented by Formula (1)>

The composition for contact lenses of the present invention contains a compound represented by formula (1).

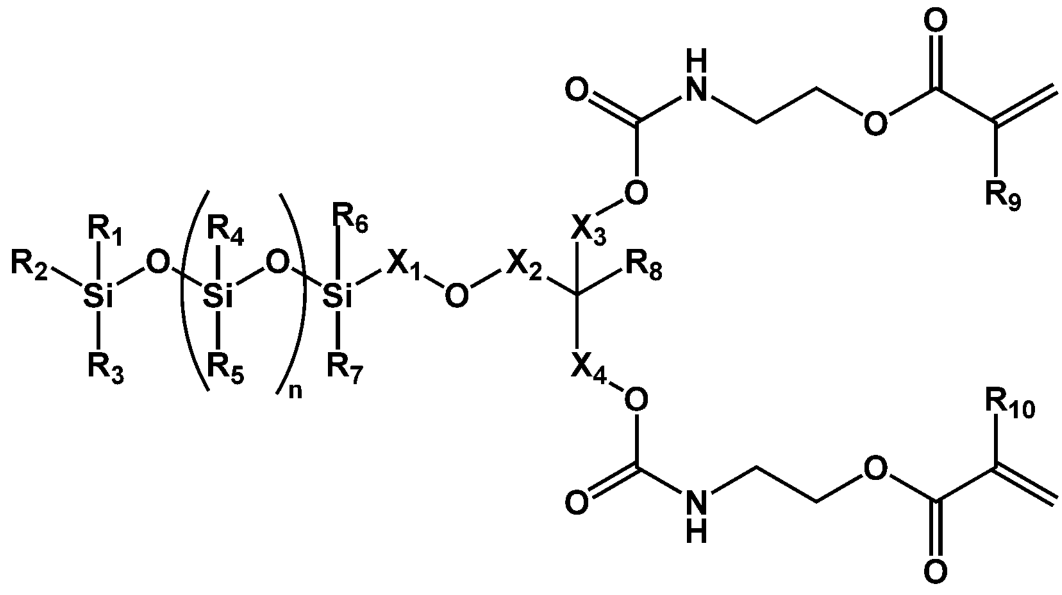

**(1)**

In formula (1), n is an integer of 0 to 300; $R_1$, $R_2$, $R_3$, $R_4$, $R_5$, $R_6$, $R_7$, and $R_8$ are each independently hydrogen or alkyl having 1 to 30 carbon atoms; $R_9$ and $R_{10}$ are each independently hydrogen or methyl; and $X_1$, $X_2$, $X_3$, and $X_4$ are each independently alkylene having 1 to 20 carbon atoms.

Here, "alkyl having 1 to 30 carbon atoms" may be any of linear alkyl having 1 to 30 carbon atoms, branched chain alkyl having 3 to 30 carbon atoms, and cyclic alkyl having 3 to 30 carbon atoms. "Alkylene having 1 to 20 carbon atoms" may be either linear alkylene having 1 to 20 carbon atoms or branched chain alkylene having 3 to 20 carbon atoms.

The compound represented by formula (1) preferably has a small number average molecular weight (Mn) in order to prevent deterioration of compatibility with a hydrophilic monomer, and preferably has a large number average molecular weight (Mn) in order to prevent oxygen permeability of a contact lens from being reduced. Hence, the number average molecular weight is preferably 500 to 20,000, more preferably 500 to 15,000, and even more preferably 500 to 10,000.

In order to produce a uniform contact lens, the compound represented by formula (1) has a molecular weight distribution (Mw/Mn) of preferably 1 to 2, more preferably 1 to 1.5, and even more preferably 1 to 1.3.

The number average molecular weight (Mn) and weight average molecular weight (Mw) can be measured by gel permeation chromatography (GPC). In this case, the number average molecular weight (Mn) and weight average molecular weight (Mw) of the compound represented by formula (1) can be obtained by calculating a polystyrene-equivalent molecular weight using polystyrene as a standard sample. The molecular weight distribution can be calculated by dividing the weight average molecular weight (Mw) by the number average molecular weight (Mn).

The compound represented by formula (1) is a silicone compound having a (meth)acryloyl group, and is compatible with a hydrophilic monomer. The reason why the compound is compatible with a hydrophilic monomer is not necessarily clear, but is conceivable as follows.

In general, silicone is hydrophobic and is thus not readily compatible with a hydrophilic monomer. However, the compound represented by formula (1) has two urethane bonds in the molecule, and the urethane bonds exhibit hydrophilicity because hydrogen bonding strongly acts. Hence, it is conceivable that the hydrophobicity of the entire molecule is moderated, and the compound is compatible with a hydrophilic monomer.

Since the compound represented by formula (1) has two (meth)acryloyl groups, the compound represented by formula (1) can be easily crosslinked when the raw material composition of the present invention is subjected to polymerization reaction.

Examples of the compound represented by formula (1) may include a compound represented by the following formula (2).

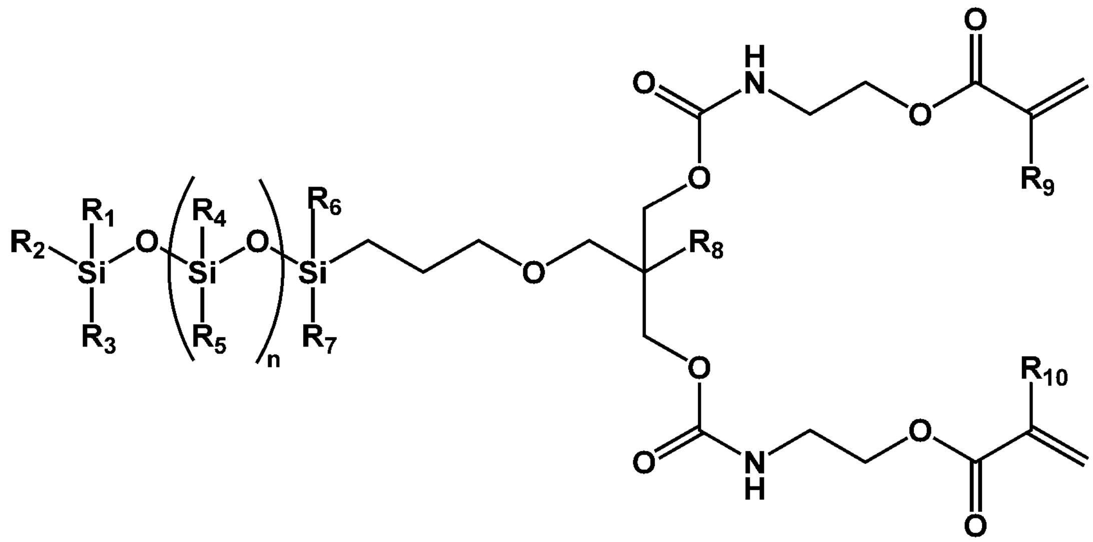

(2)

In formula (2), n is an integer of 0 to 300; $R_1$, $R_2$, $R_3$, $R_4$, $R_5$, $R_6$, $R_7$, and $R_8$ are each independently hydrogen or alkyl having 1 to 30 carbon atoms; and $R_9$ and $R_{10}$ are each independently hydrogen or methyl.

Preferable examples of the compound represented by formula (2) may include a compound represented by the following formula (3).

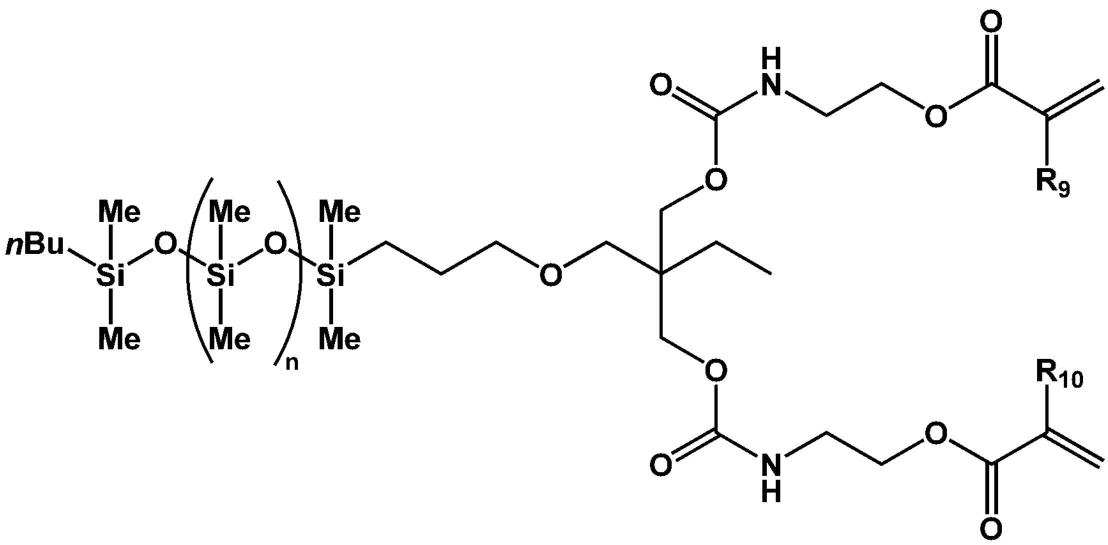

(3)

In formula (3), n is an integer of 0 to 300; and $R_9$ and $R_{10}$ are each independently hydrogen or methyl.

<Method for Producing Compound Represented by Formula (3)>

A method for producing the compound represented by formula (3) can be understood with reference to Japanese Patent Laid-Open No. 2017-8124.

[Content of Compound Represented by Formula (1) in Raw Material Composition]

Regarding the content of the compound represented by formula (1) in the raw material composition of the present invention, it is necessary to increase the content of a hydrophilic monomer in order to prevent a decrease in the water content of the contact lens. On the other hand, it is necessary that the compound represented by formula (1) be contained

at a certain ratio in order to increase the oxygen permeability of the contact lens. Accordingly, the content of the compound represented by formula (1) is preferably 1% to 50% by weight, more preferably 5% to 40% by weight, and even more preferably 10% to 40% by weight, with respect to the total amount of compounds used as raw materials.

<Hydrophilic Monomer>

The compound represented by formula (1) has good compatibility with a hydrophilic monomer and can be suitably used as a composition for contact lenses. Examples of the hydrophilic monomer used in a raw material of the composition for contact lenses include a monomer having a hydroxyl group, a carboxyl group, and a nitrogen atom. The hydrophilic monomer has a polymerizable group. Examples of the polymerizable group may include (meth)acryloyl group, ethylenic double bond, and maleimide.

The hydrophilic monomer can be selected without limitation from known monomers. Examples of the hydrophilic monomer are listed below.

Examples of the hydrophilic monomer having a hydroxyl group or carboxyl group may include (meth)acrylic acid, 2-hydroxyethyl (meth)acrylate, 2-hydroxypropyl (meth)acrylate, 4-hydroxybutyl (meth)acrylate, 2-hydroxybutyl (meth) acrylate, 2,3-dihydroxypropyl (meth)acrylate, N-(2-hydroxyethyl)(meth)acrylamide, ethylene glycol monovinyl ether, diethylene glycol monovinyl ether, and polyalkylene glycol mono(meth)acrylate.

Examples of the hydrophilic monomer having a nitrogen atom may include N,N-dimethyl(meth)acrylamide, N,N-diethyl(meth)acrylamide, N-acryloylmorpholine, N-methyl(meth)acrylamide, N-vinylpyrrolidone, and N-vinylpyrrolidinone.

Among them, N,N-dimethyl(meth)acrylamide, N,N-diethyl(meth)acrylamide, N-vinylpyrrolidone, 2-hydroxyethyl (meth)acrylate, 2-hydroxypropyl (meth)acrylate, and 4-hydroxybutyl (meth)acrylate are preferable. The hydrophilic monomer may be of one type or two or more types.

[Content of Hydrophilic Monomer in Raw Material Composition]

Regarding the content of the hydrophilic monomer in the raw material composition of the present invention, it is necessary to increase the content of the compound represented by formula (1) in order to prevent a decrease in the oxygen permeability of the contact lens. On the other hand, it is necessary that the hydrophilic monomer be contained at a certain ratio in order to prevent a decrease in the water content of the contact lens. Accordingly, the content of the hydrophilic monomer is preferably 20% to 95% by weight, more preferably 40% to 90% by weight, and even more preferably 50% to 90% by weight, with respect to the total amount of compounds used as raw materials.

<Polymerization Initiator>

The polymerization reaction of the raw material composition of the present invention is not particularly limited, and a general-purpose method used industrially can be utilized. Specifically, polymerization can be performed by cationic polymerization, radical polymerization, or anionic polymerization utilizing (meth)acryloyl groups, ethylenic double bonds, and maleimide. Among them, radical polymerization is particularly preferable from the viewpoint of ease of reaction control and the like. As a polymerization initiator for the radical polymerization method, a known compound such as a radical polymerization initiator or a reversible addition-fragmentation chain transfer (RAFT) polymerization reagent can be used.

Examples of the radical polymerization initiator are listed below.

Examples include 2-hydroxy-2-methyl-1-phenyl-propan-1-one, 2,2'-azobisisobutyronitrile, dimethyl 2,2'-azobis(2-methylpropionate), 2,2'-azobis[2-(2-imidazolin-2-yl)propane] dihydrochloride, 2,2'-azobis(2,4-dimethylvaleronitrile), 2,2'-azobis[2-(2-imidazolin-2-yl)propane] disulfate dihydrate, 2,2'-azobis(2-methylpropionamidine) dihydrochloride, 2,2'-azobis[N-(2-carboxyethyl)-2-methylpropionamidine] dihydrate, 2,2'-azobis[2-(2-imidazolin-2-yl)propane], 2,2'-azobis[2-methyl-N-(2-hydroxyethyl)propionamide], 2,2'-azobis(2-methylpropionamidine) dihydrochloride, 2,2'-azobis[2-methyl-N-(2-hydroxyethyl)propionamide], benzoyl peroxide, t-butyl hydroperoxide, cumene hydroperoxide, lauroyl peroxide, t-butyl peroxyhexanoate, and 3,5,5-trimethylhexanoyl peroxide. Among them, 2,2'-azobisisobutyronitrile and dimethyl 2,2'-azobis(2-methylpropionate) are preferable. The radical polymerization initiator may be of one type or two or more types.

[Content of Polymerization Initiator in Raw Material Composition]

The content of the polymerization initiator in the raw material composition of the present invention may be an amount that enables polymerization of the composition in a short time, and is preferably 0.01% to 10% by weight, more

preferably 0.05% to 5% by weight, and even more preferably 0.1% to 1% by weight, with respect to the total amount of compounds used as raw materials.

<Crosslinking Agent>

The raw material composition of the present invention may contain a crosslinking agent. By containing the crosslinking agent, the physical properties of the contact lens can be adjusted. The crosslinking agent preferably has at least two or more polymerizable groups. Preferable examples of the crosslinking agent include ethylene glycol dimethacrylate, diethylene glycol dimethacrylate, tetraethylene glycol dimethacrylate, ethylene glycol divinyl ether, diethylene glycol divinyl ether, triethylene glycol divinyl ether, methylene bisacrylamide, allyl (meth)acrylate, 2-(2-vinyloxyethoxy) ethyl (meth)acrylate, and divinylbenzene. The crosslinking agent may be of one type or two or more types.

<Solvent>

The raw material composition of the present invention may contain a solvent. By containing the solvent, the compound represented by formula (1) can have relatively good compatibility with the raw material composition. Preferable examples of the solvent include methanol, ethanol, 1-propanol, 2-propanol, 1-butanol, 2-butanol, tert-butanol, 1-pentanol, 2-pentanol, tert-amyl alcohol, water, N,N-dimethylformamide, dimethyl sulfoxide, N-methyl-2-pyrrolidone, γ-butyrolactone, tetrahydrofuran, benzene, toluene, xylene, heptane, hexane, methyl acetate, ethyl acetate, butyl acetate, acetone, dioxane, ethylene glycol monobutyl ether, and ethylene glycol mono-tertiary butyl ether. The solvent may be of one type or two or more types.

<Other Components>

The raw material composition of the present invention may contain other components. Other components can be selected and used according to respective purposes in order to improve various properties of the contact lens. Examples of the other components include a silicone compound other than the compound represented by formula (1), a monomer having a polymerizable group other than the hydrophilic monomer and crosslinking agent, an ultraviolet absorber, and a pigment. The silicone compound, ultraviolet absorber, and pigment may have a polymerizable group.

<Contact Lens and Method Producing Same>

Next, the contact lens of the present invention and the method producing the same will be described. The contact lens of the present invention is formed using the composition for contact lenses of the present invention.

By polymerizing the composition for contact lenses of the present invention, a contact lens having a polymer thereof can be produced.

In the following, a method for producing a contact lens using the composition for contact lenses of the present invention will be described.

The contact lens of the present invention can be obtained by a conventional method for producing a contact lens from a composition for contact lenses. For example, a cutting method, a spin cast method, or a molding method can be used.

As an example, the molding method will be described. The composition for contact lenses is filled into a mold, and the composition for contact lenses is polymerized by ultraviolet irradiation or heating. Heating may be performed after ultraviolet irradiation, or ultraviolet irradiation may be performed after heating, or ultraviolet irradiation may be performed during heating.

As a light source for ultraviolet irradiation, an ultra-high pressure mercury lamp, a high pressure mercury lamp, a low pressure mercury lamp, a deep UV lamp, a halogen lamp, a metal halide lamp, a high power metal halide lamp, a xenon lamp, a mercury xenon lamp, an excimer lamp, a KrF excimer laser, a fluorescent lamp, an LED lamp, a sodium lamp, a microwave-excited electrodeless lamp, or the like can be used without limitation.

Regarding heating, a method of heat treatment in an oven or an infrared furnace, a method of heat treatment on a hot plate, or the like is generally known. The heating temperature is preferably in a range of 30 °C to 300 °C, and more preferably in a range of 50 °C to 200 °C.

A step of cleaning a polymer extracted from the mold with a solvent can be provided. The cleaning enables removal of an unreacted raw material or the like. The solvent to be used is not particularly limited as long as it is a solvent that dissolves the unreacted raw material, and examples thereof include water, methanol, ethanol, 1-propanol, and 2-propanol. The solvent may be of one type, or may be a mixture of two or more types thereof, or cleaning with a second type of solvent may be performed after cleaning with a first type of solvent.

The contact lens of the present invention is a silicone hydrogel contact lens, and is obtained by immersing the

polymer of the present invention in water. The water may be pure water, or an aqueous solution containing an acid, a base, an inorganic salt, or the like.

The higher the water content of the contact lens, the more comfortable the wearing feeling is felt. Since dryness tends to be felt with prolonged use, the water content is preferably 20% to 60% by weight, more preferably 25% to 50% by weight, and even more preferably 30% to 45% by weight.

The contact lens of the present invention may further include other steps in addition to the steps described above. Examples of the other steps include surface modification.

The polymer of the composition for contact lenses of the present invention has excellent transparency. The contact lens of the present invention has an appropriate water content, and thus can be suitably used as a contact lens.

Examples

Hereinafter, the present invention will be described by examples. The evaluation methods and compounds used in the examples are as follows.

<Measurement of Molecular Weight>

A molecular weight of the silicone compound was measured by gel permeation chromatography (GPC), and a ratio of weight average molecular weight (Mw) to number average molecular weight (Mn) was defined as a molecular weight distribution (Mw/Mn). A polystyrene-equivalent molecular weight was measured using polystyrene as a standard sample. The polystyrene equivalent molecular weight measurement by GPC was performed under the following measurement conditions.

a) Measurement instrument: HPLC LC-2000Plus series manufactured by JASCO Corporation
b) Column: Shodex KF-804L ×2 (in series)
c) Oven temperature: 40 °C
d) Eluent: toluene 0.7 mL/min
e) Standard sample: polystyrene
f) Injection volume: 20 μL
g) Concentration: 0.05 g/10 mL
h) Sample preparation: The sample was stirred and dissolved at room temperature, using toluene as a solvent.

<Evaluation of Appearance of Composition>

The appearance of a prepared composition was visually confirmed. If the compatibility between the silicone compound and the hydrophilic monomer is good, a transparent uniform solution can be obtained. On the other hand, if the compatibility is poor, turbidity or separation occurs in the composition.

<Evaluation of Appearance of Film>

The appearance of a prepared film was visually confirmed. If a transparent film can be obtained and there is no liquid or gel-like component on the film surface, it can be said that there is no uncured portion and the film is good. On the other hand, if liquid or gel-like components remain on the film surface, that is, if there is an uncured portion, or if the film is white turbid, the film is not suitable.

<Measurement of Water Content>

The film in a dry state was immersed in water for 70 hours, and the moisture on the surface was wiped off. The weight in the dry state was defined as W2, the weight of the film after immersion in water was defined as W1, and the water content was calculated by the following formula. If the water content is 30% to 45% by weight, it can be said to be good.

$$\text{Water content (\% by weight)} = ((W1-W2)/W1)\times 100$$

<Compound Represented by Formula (1)>

Among the compounds represented by Formula (1), a compound represented by Formula (3-1) and a compound represented by Formula (3-2) were used in the examples.

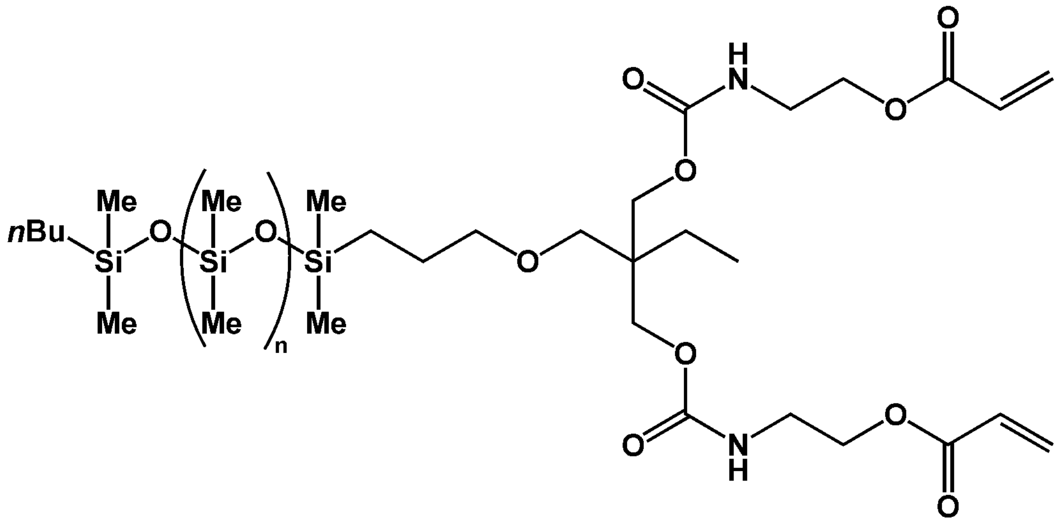

**(3-1)**

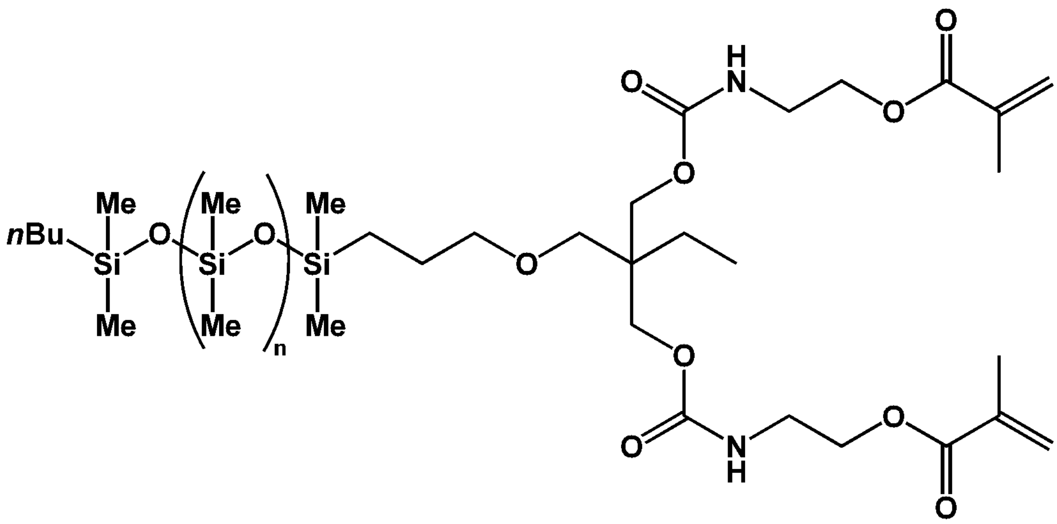

**(3-2)**

Table 1 shows a measurement result of the molecular weight of the compounds used as the compound represented by Formula (1).

[Table 1]

| | Mn | Mw | Mw/Mn |
|---|---|---|---|
| Formula (3-1) | 1690 | 1940 | 1.15 |
| Formula (3-2) | 1210 | 1540 | 1.27 |

<Compound Used in Comparative Example>

FM-0711: Terminal methacryl-modified organosilicon compound (trade name: Silaplane FM-0711, manufactured by JNC Corporation, number average molecular weight: 1,000)

FM-7711: Both-terminal methacryl-modified organosilicon compound (trade name: Silaplane FM-7711, manufactured by JNC Corporation, number average molecular weight: 1,000)

<Hydrophilic Monomer>

NVP: N-vinylpyrrolidone
HEMA: 2-hydroxyethyl methacrylate
DMAA: N,N-dimethylacrylamide

<Crosslinking Agent>

EGDMA: ethylene glycol dimethacrylate

<Polymerization Initiator>

AIBN: 2,2'-azobisisobutyronitrile

<Preparation of Composition>

The composition used in the present example was prepared by the following procedure.

[Example 1] Preparation of Composition A1

The compound represented by formula (3-1) (30 parts by weight), HEMA (25 parts by weight), DMAA (29 parts by weight), NVP (15 parts by weight), AIBN (0.5 parts by weight), and EGDMA (0.5 parts by weight) were mixed and stirred. When the appearance of the obtained composition was visually confirmed, it was a transparent and uniform solution.

[Examples 2 to 4, Comparative Examples 1 to 2] Preparation of Compositions A2 to A4 and B1 to B2

Compositions A2 to A4 and B1 to B2 were prepared in the same manner as in Example 1, except that the compound represented by formula (1), the hydrophilic monomer, the polymerization initiator, and the crosslinking agent were changed as shown in Table 2. The results are shown in Table 2 together with the result of Example 1. In Table 2, the numerical values in square brackets represent weight ratios.

[Table 2]

| Example | Composition No. | Silicone compound | Hydrophilic monomer | | | Polymerization initiator | Crosslinking agent | Appearance of composition |
|---|---|---|---|---|---|---|---|---|
| 1 | A1 | Formula (3-1) [30] | HEMA [25] | DMAA [29] | NVP [15] | AIBN [0.5] | EGDMA [0.5] | Transparent and uniform |
| 2 | A2 | Formula (3-2) [30] | HEMA [25] | DMAA [29] | NVP [15] | AIBN [0.5] | EGDMA [0.5] | Transparent and uniform |
| 3 | A3 | Formula (3-1) [13] | HEMA [31] | DMAA [36] | NVP [19] | AIBN [0.5] | EGDMA [0.5] | Transparent and uniform |
| 4 | A4 | Formula (3-2) [13] | HEMA [31] | DMAA [36] | NVP [19] | AIBN [0.5] | EGDMA [0.5] | Transparent and uniform |
| Comparative Example 1 | B1 | FM-0711 [30] | HEMA [25] | DMAA [29] | NVP [15] | AIBN [0.5] | EGDMA [0.5] | Turbid and separated |
| Comparative Example 2 | B2 | FM-7711 [30] | HEMA [25] | DMAA [29] | NVP [15] | AIBN [0.5] | EGDMA [0.5] | Turbid and separated |

Compositions A1 to A4 of the present invention using the compound represented by formula (1) were transparent and uniform solutions. On the other hand, compositions B1 to B2 not using the compound represented by formula (1) were turbid and separated.

[Example 5] Preparation of Film and Measurement of Water Content

Composition A1 (3.0 g) was placed in an aluminum cup having a diameter of 55 mm, heated at 80 °C for 1 hour, and then the film was extracted from the aluminum cup. When the appearance of the obtained film was visually confirmed, there was no uncured portion and the film was transparent. The obtained film was cut to be approximately 0.4 g, and when measured based on the measurement of the water content described above, the water content was 36.3% by weight.

[Examples 6 to 8 and Comparative Examples 3 to 4]

Films were prepared in the same manner as in Example 5, except that the compositions were changed as shown in Table 3. The results are shown in Table 3 together with the result of Example 5.

[Table 3]

| Example | Composition No. | Appearance of Film | Water content <wt%> |
|---|---|---|---|
| 5 | A1 | Transparent There was no uncured portion | 36.3 |
| 6 | A2 | Transparent There was no uncured portion | 34.8 |
| 7 | A3 | Transparent There was no uncured portion | 39.2 |
| 8 | A4 | Transparent There was no uncured portion | 38.9 |
| Comparative Example 3 | B1 | White turbid There was an uncured portion | 72.5 |
| Comparative Example 4 | B2 | White turbid There was an uncured portion | 52.7 |

The films obtained by polymerizing compositions A1 to A4 of the present invention that used the compound represented by formula (1) were transparent and had no uncured portion. The water content was 30% to 45% by weight, which was good. On the other hand, the films obtained by polymerizing compositions B1 to B2 that did not use the compound represented by formula (1) were white turbid. Since liquid components remained on the film surface, there was an uncured portion. The water content exceeded 50% by weight, which was not suitable. Thus, it can be seen that the compound represented by formula (1) can be suitably used as a raw material of a composition for contact lenses.

Industrial Applicability

The silicone compound that is a raw material of the composition for contact lenses of the present invention is well compatible with a hydrophilic monomer. A contact lens formed using the composition for contact lenses of the present invention has transparency and can have an appropriate water content. The composition for contact lenses of the present invention can be suitably applied to contact lenses.

## Claims

**1.** A composition for contact lenses, comprising a compound represented by formula (1),

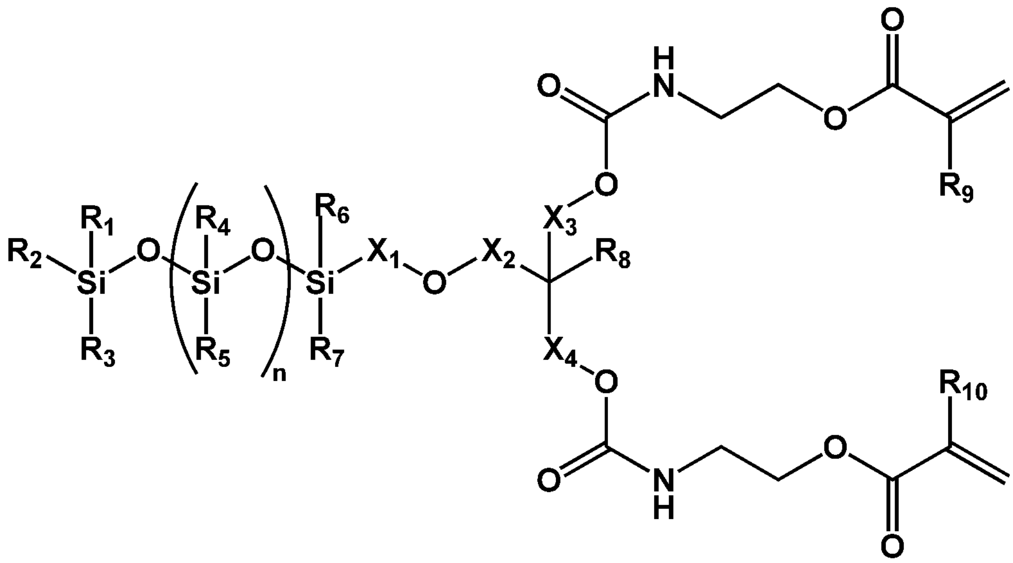

(1)

wherein in formula (1), n is an integer of 0 to 300, $R_1$, $R_2$, $R_3$, $R_4$, $R_5$, $R_6$, $R_7$, and $R_8$ are each independently hydrogen or alkyl having 1 to 30 carbon atoms, $R_9$ and $R_{10}$ are each independently hydrogen or methyl, and $X_1$, $X_2$, $X_3$, and $X_4$ are each independently alkylene having 1 to 20 carbon atoms.

2. The composition for contact lenses as claimed in claim 1, wherein the compound represented by formula (1) is a compound represented by formula (2),

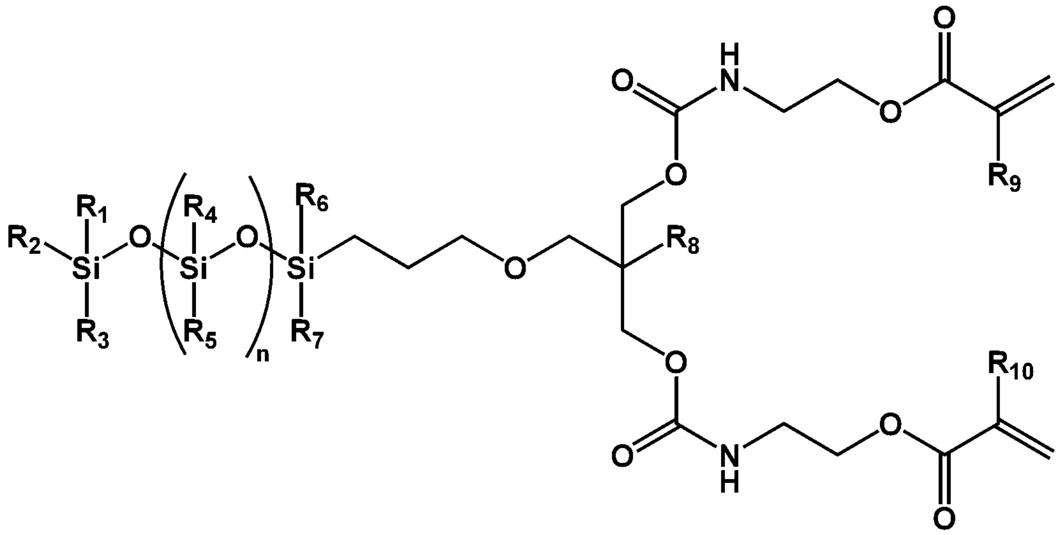

(2)

in formula (2), n is an integer of 0 to 300, $R_1$, $R_2$, $R_3$, $R_4$, $R_5$, $R_6$, $R_7$, and $R_8$ are each independently hydrogen or alkyl having 1 to 30 carbon atoms, and $R_9$ and $R_{10}$ are each independently hydrogen or methyl.

3. The composition for contact lenses as claimed in claim 1, wherein the compound represented by formula (1) is a compound represented by formula (3),

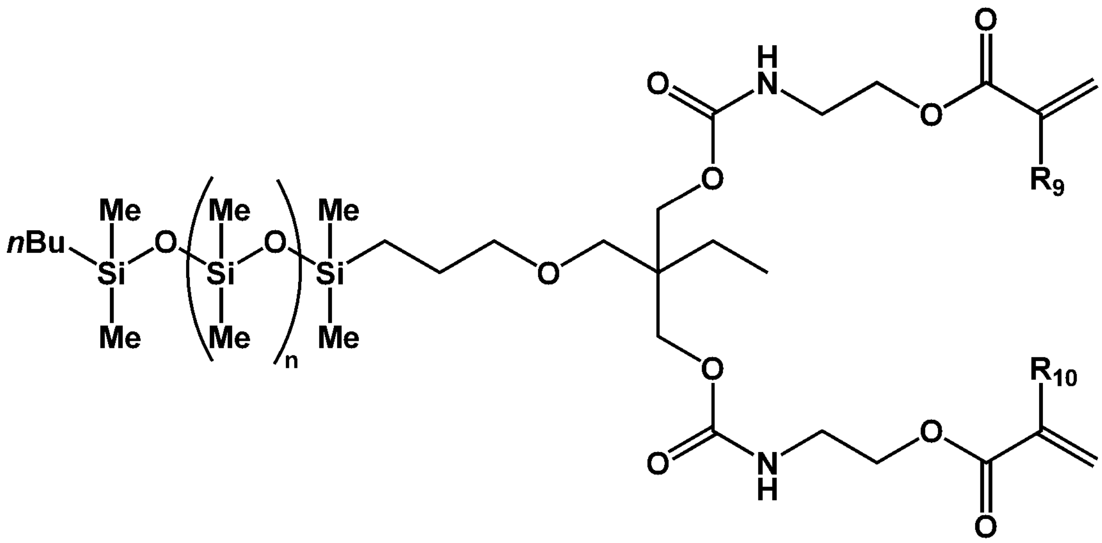

(3)

in formula (3), n is an integer of 0 to 300, and $R_9$ and $R_{10}$ are each independently hydrogen or methyl.

4. The composition for contact lenses as claimed in any one of claims 1 to 3, further comprising at least one hydrophilic monomer.

5. The composition for contact lenses as claimed in claim 4, wherein the hydrophilic monomer is any one or more of N,N-dimethyl(meth)acrylamide, N,N-diethyl(meth)acrylamide, N-vinylpyrrolidone, 2-hydroxyethyl (meth)acrylate, 2-hydroxypropyl (meth)acrylate, and 4-hydroxybutyl (meth)acrylate.

6. The composition for contact lenses as claimed in claim 5, further comprising a polymerization initiator.

7. The composition for contact lenses as claimed in claim 6, comprising 1 to 50 parts by weight of the compound represented by formula (1), 20 to 95 parts by weight of the hydrophilic monomer, and 0.01 to 10 parts by weight of the polymerization initiator.

8. A contact lens, comprising a polymer of the composition for contact lenses as claimed in any one of claims 1 to 3.

9. A method for producing a contact lens, comprising polymerizing the composition for contact lenses as claimed in any one of claims 1 to 3 by heat or ultraviolet irradiation.

**INTERNATIONAL SEARCH REPORT**

International application No. **PCT/JP2024/019475**

**A. CLASSIFICATION OF SUBJECT MATTER**

***C08F 30/08***(2006.01)i; ***G02C 7/04***(2006.01)i
FI: C08F30/08; G02C7/04

According to International Patent Classification (IPC) or to both national classification and IPC

**B. FIELDS SEARCHED**

Minimum documentation searched (classification system followed by classification symbols)

C08F30/08; G02C7/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | JP 2016-014013 A (SHIN-ETSU CHEMICAL CO., LTD.) 28 January 2016 (2016-01-28) entire text | 1-9 |
| A | JP 2017-8124 A (JNC CORP.) 12 January 2017 (2017-01-12) entire text | 1-9 |
| A | JP 2017-8125 A (JNC CORP.) 12 January 2017 (2017-01-12) entire text | 1-9 |
| A | WO 2006/109496 A1 (JSR CORPORATION) 19 October 2006 (2006-10-19) entire text | 1-9 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 July 2024** | **30 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/019475**

| Patent document cited in search report | Publication date (day/month/year) | Patent family member(s) | Publication date (day/month/year) |
|---|---|---|---|
| JP 2016-014013 A | 28 January 2016 | US 2015/0361114 A1<br>entire text<br>EP 2955207 A1 | |
| JP 2017-8124 A | 12 January 2017 | (Family: none) | |
| JP 2017-8125 A | 12 January 2017 | (Family: none) | |
| WO 2006/109496 A1 | 19 October 2006 | KR 10-2007-0116860 A<br>TW 200700443 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015140393 A
- JP 2016196644 A
- JP 2016000779 A
- JP 2017008124 A